# EUROPEAN PATENT APPLICATION

(11) **EP 4 166 989 A1**
(43) Date of publication of application: **19.04.2023**
(21) Application number: 21202463.2
(22) Date of filing: 13.10.2021
(51) Int. Cl.: G01S 19/07, G01S 19/40, G01S 19/41, G01S 19/45, G01S 19/46, G01S 13/86, G01S 17/50, G01S 17/86, G01S 13/50, G01S 17/06, G01S 13/931, G01S 17/931

(54) **METHODS AND SYSTEMS FOR DETERMINING A POSITION AND AN ACCELERATION OF A VEHICLE**

(71) Applicant: Aptiv Technologies Limited, St. Michael (BB)
(72) Inventor: VOLLBRACHT, Dennis, 40721 Hilden (DE); PISHEHVARI, Ahmad, 42103 Wuppertal (DE); LEßMANN, Stephanie, 40699 Erkrath (DE); IURGEL, Uri, 42369 Wuppertal (DE)
(74) Representative: Manitz Finsterwald Patent- und Rechtsanwaltspartnerschaft mbB

(57) **Abstract**

A computer implemented method for determining a position, and/or an acceleration, and/or an angular rate and/or an orientation of a vehicle includes the following steps carried out by computer hardware components: determining first measurement data using a first sensor; determining a preliminary position and/or a preliminary orientation based on the first measurement data; determining second measurement data using a second sensor, wherein the second sensor includes a radar sensor and/or a LIDAR sensor and/or a camera; determining a preliminary acceleration and/or a preliminary angular rate based on the second measurement data; and determining a final position, and/or a final acceleration, and/or a final angular rate and/or a final orientation based on the preliminary acceleration and/ or the preliminary angular rate, and the preliminary position and/or the preliminary orientation.

## Description

### FIELD

The present disclosure relates to methods and systems for determining a position and an acceleration of a vehicle.

### BACKGROUND

Self-localization is an important part of many autonomous driving applications. There are diverse methods to solve the ego-localization problem such as for example Global Navigation Satellite Systems (GNSS), dead reckoning or matching algorithms, e.g., using LiDAR systems. Currently in many vehicles a receiver for signals of a GNSS is available. It seems, that future vehicles will have also access to the internet via mobile phone networks. Also, the usage of radar sensors in the vehicle industry is growing more and more. Based on GNSS signals and sensors, for example an absolute position, an acceleration and/or an absolute orientation of the vehicle can be estimated. However, to reach a necessary precision for autonomous driving application the effort and costs are usually very high.

Accordingly, there is a need to provide methods and systems for an efficient position, acceleration and/or orientation determination.

### SUMMARY

The present disclosure provides a computer implemented method, a computer system, a vehicle, and a non-transitory computer readable medium according to the independent claims. Embodiments are given in the subclaims, the description and the drawings.

In one aspect, the present disclosure may be directed to a computer implemented method for determining a position, and/or an acceleration, and/or an angular rate and/or an orientation of a vehicle, wherein the method comprises the following steps performed (in other words: carried out) by computer hardware components: determining first measurement data using a first sensor; determining a preliminary position and/or a preliminary orientation based on the first measurement data; determining second measurement data using a second sensor, wherein the second sensor is a radar sensor and/or a LIDAR sensor and/or a camera; determining a preliminary acceleration and/or a preliminary angular rate based on the second measurement data; and determining a final position, and/or a final acceleration, and/or a final angular rate and/or a final orientation based on the preliminary acceleration and/or the preliminary angular rate, and the preliminary position and/or the preliminary orientation.

In other words, the final position, and/or the final acceleration, and/or the final angular rate and/or the final orientation may be determined based on two measurement data using two different sensors, wherein the second sensor is a radar sensor and/or a LIDAR sensor and/or a camera. The output of the first sensor may be the preliminary position and/or the preliminary orientation and the output of the second sensor may be the preliminary acceleration and/or the preliminary angular rate. The preliminary position and/or the preliminary orientation, and the preliminary acceleration and/or the preliminary angular rate, based on the measurement data of the first sensor and the measurement data of the second sensor, may determine the final position, and/or the final acceleration, and/or the final angular rate and/or the final orientation.

The position may define a location of a vehicle. The position may be described by coordinates in a coordinate-system to define the location of the vehicle on earth, for example as spherical coordinates, earth-centered or earth-fixed (ECEF) Cartesian coordinates in three dimensions, or a set of numbers, letters or symbols forming a geocode.

The acceleration of the vehicle may be determined by derivation of the velocity of the vehicle, wherein the velocity of the vehicle may be a change of position over a period of time.

The angular rate may describe an angular displacement rate (in other words: a rate of rotation), which may be a movement around an axis (e.g. a pitch axis, a roll axis or a yaw axis) of the vehicle in a vehicle-coordinate system. The vehicle-coordinate system may describe a coordinate system, wherein the vehicle's positive pitch axis (in other words: y-axis or lateral axis) may always point to its left, and the positive yaw axis (in other words: z-axis or vertical axis) may always point up from the ground to the air. The positive roll axis (in other words: x-axis or longitudinal axis) may be perpendicular to the y-/z-plane and point to the driving direction of the vehicle.

The yaw axis of the vehicle may describe the direction perpendicular to the direction of motion of the vehicle, pointing upwards perpendicular to the street. The angular rate may be the yaw rate or yaw velocity of a car, aircraft, projectile or other rigid body is the angular velocity of this rotation, or rate of change of the heading angle when the aircraft is horizontal. It is commonly measured in degrees per second or radians per second.

The orientation of the vehicle may be determined by three Euler angles (a yaw angle, a pitch angle and a roll angle) with respect to a fixed coordinate system (for example a world coordinate system).

Radar sensors are impervious to adverse or bad weather conditions, working reliably in dark, wet or even foggy weather. They are able to identify the distance, direction and relative speed of vehicles or other objects. Measurement data from LIDAR sensors may be very detailed and may include fine and accurate information about objects at a great distance. Ambient lightning may not influence the quality of the captured information by LIDAR sensors, thus the results at day and night may be without any loss of performance due to disturbances such as shadows or sunlight. Measurement data from a camera may be used to detect RGB (red-green-blue) information with extremely high resolution.

According to an embodiment, the final position, and/or the final acceleration, and/or the final angular rate and/or the final orientation may be determined by a Kalman filter.

A Kalman filter may be a method that may use a series of measurements observed over time or by several systems, containing statistical noise and other inaccuracies, and produces estimates of unknown variables that tend to be more accurate than those based on a single measurement alone. A Kalman filter may be used for evaluation of radar signals or fusion of different positioning systems such as GNSS data or registration based self-localization methods to determine the position of moving objects.

According to an embodiment, the method further comprises the following step carried out by the computer hardware components: receiving differential correction signals via a mobile network.

Differential correction signals may be provided by base-stations which are fixed at a precisely known point on earth and allow the position of a vehicle to be determined in real time with a high accuracy, for example 10 to 20 centimeters, at any point on earth. Since the coordinates of the base-stations are known and fixed, any measured deviation from the point of a base-station compared to, for example, a position received from a satellite navigation system (e.g. GPS, GLONASS, GALILEO or BEIDOU) may be identified as a measurement error. The error determined in this way may apply to all recipients who are in a certain radius around this known point of the base-station. A mobile network or a cellular network may be a communication network which may transmit data wirelessly.

According to an embodiment, the differential correction signals may be received by a communication interface of the vehicle or a mobile device.

A communication interface of the vehicle may be a receiver, which may be able to receive and handle the differential correction signals. The communication interface may be installed in the vehicle but may also be a mobile device (for example a mobile phone, a tablet, or the like) which is not fixed to a location.

According to an embodiment, the preliminary position and/or the preliminary orientation may be determined using a navigation interface of the vehicle.

The navigation interface may receive signals from a satellite navigation system and may determine a position and an orientation of the vehicle based on the received signals from the satellite navigation system.

According to another embodiment, the preliminary position and/or the preliminary orientation may be determined using a mobile device.

A mobile device may be a portable device, for example a mobile phone, a cell phone or a tablet.

According to an embodiment, the first sensor may comprise a GNSS sensor.

A GNSS sensor may be a sensor that detects signals from a Global Navigation Satellite Systems, like GPS, GLONASS, GALILEO or BEIDOU. The GNSS sensor may only be able to detect one GNSS signal or a combination of different GNSS signals.

According to an embodiment, the preliminary angular rate may be a yaw rate and/or a pitch rate and/or a roll rate and/or the final angular rate may be a yaw rate and/or a pitch rate and/or a roll rate.

According to an embodiment, the radar sensor and/or the LIDAR sensor may estimate the angular rate and a velocity of the vehicle based on stationary target detections, and the preliminary acceleration may be determined by deriving the velocity of the vehicle (in other words: the preliminary acceleration may be the (mathematical) derivative of the velocity).

According to another embodiment, the radar sensor and/or the LIDAR sensor capture at least two consecutive frames, wherein the preliminary angular rate and/or the preliminary acceleration are estimated based on the at least two consecutive frames.

According to an embodiment, the camera may capture at least two consecutive frames, wherein the preliminary angular rate and/or the preliminary acceleration may be estimated based on the at least two consecutive frames.

A frame may describe a section of the environment captured by the radar sensor and/or the LIDAR sensor and/or the camera. Consecutive frames may describe at least two different frames, wherein one frame directly follows the other frame, in other words, one frame is captured by the camera directly after the other from has been captured by the camera. No further frame is provided between the one frame and the other frame.

According to an embodiment, the second sensor may comprise an ultrasonic sensor.

An ultrasonic sensor may be a device that generate or sense ultrasound energy. Ultrasonic sensors may include one or more of the following three components: a transmitter, a receiver and a transceiver. The transmitter may convert an electrical signal into an ultrasound signal, the receiver may convert the ultrasound signal into an electrical signal, and the transceiver may both transmit and receive ultrasound signals.

In another aspect, the present disclosure is directed at a computer system, said computer system being configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure may be directed to a vehicle, comprising the computer system described herein, the first sensor and the second sensor.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

In another aspect, the present disclosure is directed at a computer system, said computer system being configured to carry out several or all steps of the computer implemented method described herein.

### DRAWINGS

Exemplary embodiments and functions of the present disclosure are described herein in conjunction with the following drawings, showing schematically:
- Fig. 1: an effect of time delay of the signal of satellite(s);
- Fig. 2: a configuration of a dGPS system with a base station;
- Fig. 3: a block diagram of a dGPS system;
- Fig. 4: a flow diagram illustrating a dGPS system;
- Fig. 5: a flow diagram for ego-motion estimation based on Doppler radar;
- Fig. 6: a flow diagram illustrating a dGPS system without IMU;
- Fig. 7: a block diagram of a radar-based dGPS system;
- Fig. 8: a block diagram of a radar-based dGPS system using a mobile phone;
- Fig. 9: a flow diagram illustrating a method for determining a position and an acceleration of a vehicle according to various embodiments;
- Fig. 10: a computer system with a plurality of computer hardware components configured to carry out steps of a computer implemented method for determining a position and an acceleration of a vehicle according to various embodiments;
- Fig. 11A: a velocity profiling using Doppler component of stationary targets; and
- Fig. 11B: a transformation of sensor velocity and its direction to yaw rate and velocity of the vehicle.

### DETAILED DESCRIPTION

One of the most used methods for outdoor self-localization may be to use Global Navigation Satellite Systems (GNSS). However, the accuracy of a GNSS system may not be sufficient for autonomous driving applications as the accuracy may be in the range of meters (e.g. 15 m). This may follow from some error sources such as disturbance of the line-of-sight between satellites and a receiver, blockage of the satellite signal caused by tall buildings, a delay in receiving one (or more) signal(s) caused by atmospheric disturbances, which may shift the position drastically (e.g. in meter range) or a small time-shift of the satellites clock which can cause a drift in the position estimation.

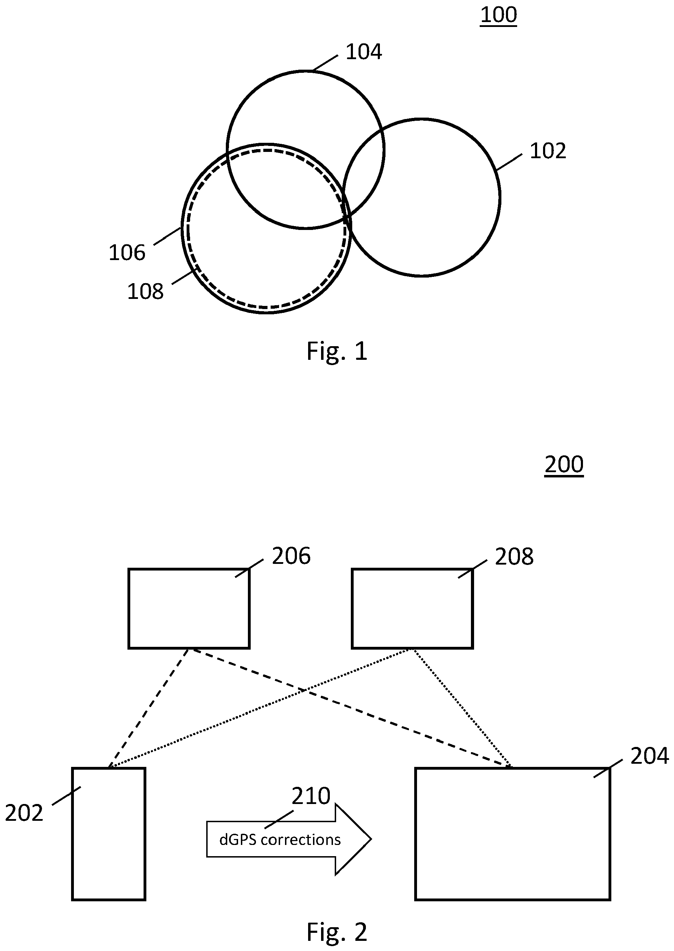

If the satellite signal is blocked, another solution (such as dead reckoning) may be applied as a backup strategy to prevent a pose (position and orientation) drift. However, in the most cases the time delay or disturbance of the signal of satellite(s) may be the reason of an inaccurate pose estimation because there may be no central control unit for all satellites. The importance of time clock precision may be due to the position estimation based on triangulation of different satellites responses. Each satellite may send radio waves to the receiver to estimate the precise distance between the receiver and the satellite. The final estimation of the global position of the receiver may be done through the triangulation of all distances as it is shown in Fig. 1.

Fig. 1 shows an illustration 100 of an effect of time delay of the signal of three satellites (a signal 102 from a first satellite, a signal 104 from a second satellite, and a signal 106 from a third satellite) caused by satellite's clock or atmospheric disturbance on position estimation. The correct position estimation may be determined based on the intersection of the signals from the three satellites. The correct distance for the third satellite may differ from the estimated distance for the third satellite 108 (dashed line) and the result may be a wrong position estimation.

To deal with the problem, differential global position systems (dGPS) may be applied. Fig. 2 shows an illustration 200 of the configuration of a dGPS with a base station 202. Such a system may be an enhancement over global positioning systems (GPS). It may provide correction signals 210 for a normal GNSS to correct the error caused by time shifts. For generating these correction signals 210, dGPS may use fixed stations on the ground with precise known positions. Those stations may be called base stations 202. The base stations 202 may be mounted on the ground and may average their own position over a long period of time (e.g. a day). The correction signals 210 may then be transmitted to a receiver 204 (for example mounted on a vehicle) which may be within a certain range from the base station 202. With base stations 202, which may be part of mobile phone networks, the time errors and distance errors of the signals of satellites 206, 208 may be measured to be used for positioning corrections.

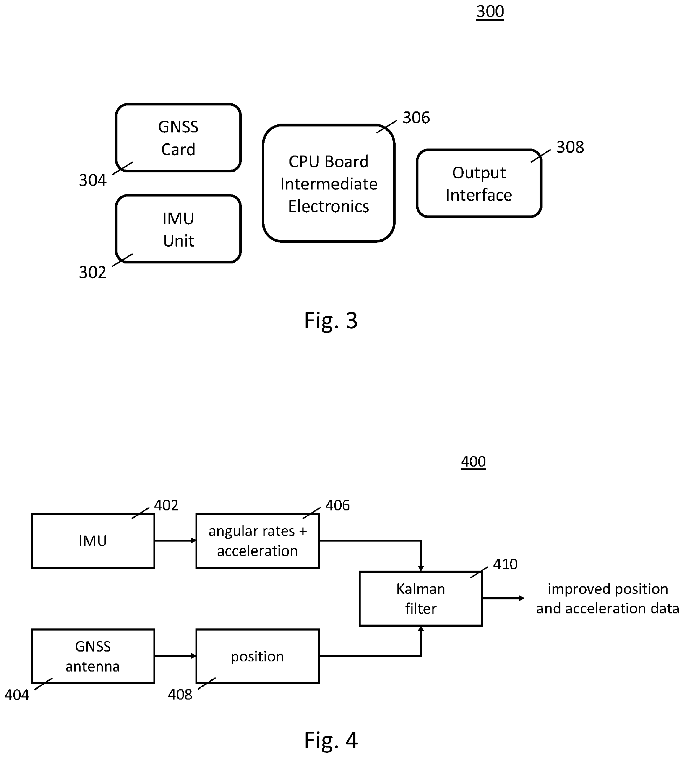

Fig. 3 shows a block diagram of a dGPS system 300. The dGPS system may include an inertial measurement unit (IMU) 302, a GNSS card 304, a CPU board 306 with intermediate electronics, and an output interface 308. The IMU 302 may include very precise accelerometers and gyroscopes to estimate the acceleration and yaw rate in three dimensions. Since GNSS signals, received by the GNSS card 304 may only be available with a low frequency, for example of 2 Hz, the position estimation between two sample times may be still possible by the IMU unit 302 even if the GNSS signal may not be available. The dGPS system may still be able to estimate the position of the vehicle as the sample time of the entire system may have a higher rate as the GNSS signal. Also, if the vehicle may enter GNSS-denied areas such as tunnels, it may be the IMU unit 302 that may deliver the data to keep track of the vehicle's movements. Using the correction signals may allow to achieve a high accuracy, for example of 10 cm, for position estimation which may be used for autonomous driving systems.

A disadvantage of using an IMU unit 302 for estimating the position of a vehicle if there is a weak GNSS signal or no GNSS signal at all may be high costs for the sensors such as the precise accelerometers and gyroscopes (which may cause more than 50% of the total cost of an IMU unit 302) for example. It may be economically not reasonable to use such a system in future for autonomous systems of driverless cars. The main reason for the high expenditure may be the measurement technology used for the IMU unit 302. On the other side, the costs for a state-of-the-art dGPS hardware (for example receivers, antennas and the modem) may only be approximately 2% of the total cost of an IMU unit 302.

If the IMU unit 302 may be replaced by another cost-optimized solution, the dGPS system may be used as a standard feature in future vehicles equipped with autonomous driving functions. The ego-motion may be estimated for example based on many sensors such as LiDAR sensors, camera systems, radar sensors or ultrasonic sensors. The principle of using camera systems and/or LiDAR sensors and/or radar sensors for ego-motion estimation may be to use two consecutive sensor observations to find the vehicle movement between them. In case of using LIDAR sensors, this methodology may be called scan matching. Scan matching may find the best overlap between two consecutive LIDAR sensor observations and may use different parameters (a rotation and a translation) for moving the host between those scans. In order to perform this task different algorithms may be applied, such as methods that may be, e.g., based on the so called ICP (Iterative Closest Point) approach.

Using camera systems may have its restrictions in cases of darkness, direct light, or the like. For the replacement of the IMU unit 302 by camera systems, a weather and light condition independent system may be desired. However, in general a camera system may be a good addition, since 3D motion may be estimated in 6 degrees of freedom (DOF) for a stereo camera and 5 DOF for a mono camera (translation only up-to-scale). Such a system may estimate the absolute angles (tilt, roll) to the road surface ahead additionally. Confidence signals may help to identify possible failure cases of the system to allow a fallback-strategy. For specific circumstances, the disadvantages of a vision system may be covered with for instance radar sensors or ultrasonic sensors.

Replacing the IMU unit 302 with a radar-based system may meet the prerequisites of cost efficiency and weather-and lighting dependence. The radar's capability to measure range rate may be applied for motion estimation, i.e. yaw rate estimation and/or pitch rate estimation and velocity estimation. Most of the autonomous driving applications may need solely 2D motion information and the methodology of motion estimation using Doppler radars may be sufficient to estimate the vehicle motion in 2D. However, the third (vertical) dimension may also be available with a low frequency, for example of 2Hz, by satellites and the vertical dimension may not change drastically within a short period of time, for example 0.5 seconds, even in high speed scenarios. It may also be possible to apply the approach described herein of planar 2D host motion estimation from radar (velocity and yaw rate) to 3 dimensions (vertical axis: pitch rate, vertical velocity), because the equations may not be specific for the horizontal plane and may be used also for the vertical plane. This may be implemented by using radar sensors that measure elevation, or by mounting the radar sensors vertically. The movement estimation may be more precise if the elevation measurement is included. There may be several approaches for motion estimation using solely radars such as instantaneous ego-motion estimation using Doppler radars, radar scan to map matching algorithms, or the like. A cost-efficient solution may be to solve the ego motion problem without a priori maps. The method described herein may also be applicable to cloud-based maps.

Fig. 4 shows a flow diagram illustrating a dGPS system 400 using Kalman filter 410 to merge the result of GNSS 404, for example a position (step 408) and the result of the IMU 402, for example angular rates and/or acceleration (step 406). For developing an IMU-less dGPS system as described herein, the IMU 402 may be replaced by one or more perception sensors that may be able to estimate ego-motion of a vehicle (e.g. instantaneous ego-motion estimation with Doppler radars). The sensor may be a radar sensor. The radar sensor may be cost efficient and robust. However, instead of (or in addition to) replacing the IMU 402 by a radar sensor, other sensors which may allow to estimate the ego -motion such as ultrasonic sensors, LIDAR sensors or camera-based systems may be used. Any combination of different sensor types may be used, too. The sensors' output may be fused with the Kalman filter 410.

According to one embodiment of a radar-based ego- motion estimation, the principles of the method describe herein will be explained, but the method may not be limited to this embodiment.

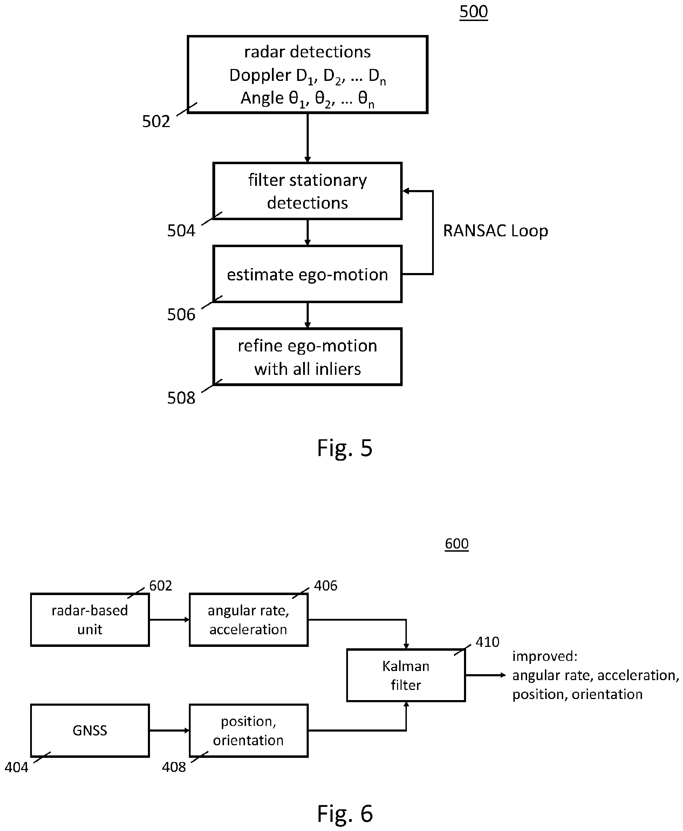

Radar sensors, for example Doppler-capable radars, may be used to capture the yaw rate and acceleration (2/3D) of the host motion without using an IMU. Fig. 5 shows a flow diagram 500 for ego-motion estimation based on Doppler radar and may be used to explain the principle of the ego-motion estimation based on stationary target detections.

Radar detections 502 may be acquired, for example including doppler data, angle data or range data.

Stationary detection filtering 504 may be carried out using different algorithms such as RANSAC (random sample consensus). RANSAC is an iterative method to estimate parameters of a mathematical model from a set of observed data that contains outliers. After estimating the ego-motion 506 for example with the RANSAC method, the model may be estimated again 508 (in other words: refined) by least-squares methods using all inliers/stationary detections estimated before (LO-RANSAC).

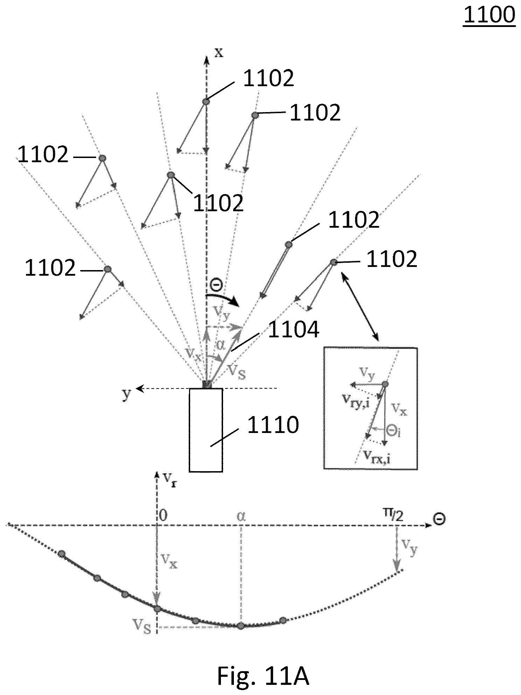

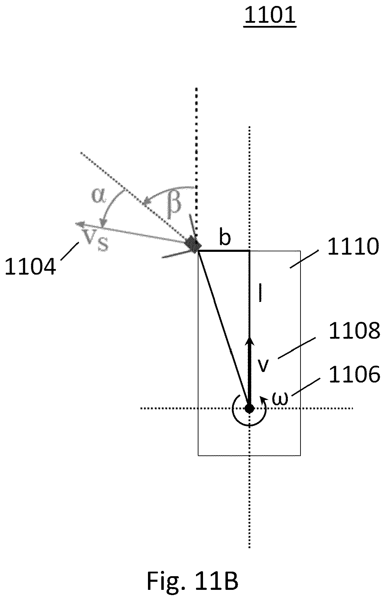

Fig. 11A shows a velocity profiling 1100 using Doppler component of stationary targets 1102 and Fig. 11B shows a transformation 1101 of the sensor velocity 1104 and its direction to yaw rate 1106 of the vehicle 1110 and vehicle velocity 1108 of the vehicle 1110.

It has been found that from the velocity of stationary targets 1102, the sensor velocity 1104 and its direction may be estimated by using Doppler-capable radars. Based on the sensor velocity 1104 and its mounting position and orientation in vehicle coordinates (with the origin in the middle of the rear axle), the vehicle velocity 1108 of the vehicle 1110 and yaw rate 1106 of the vehicle 1110 can be estimated for example as described in Kellner, Dominik et al., 2013, Instantaneous ego-motion estimation using Doppler radar, Proceedings - IEEE International Conference on Robotics and Automation, p. 869-874.

It will be understood that the described principle of a radar-based ego-motion estimation is only an exemplary approach described for illustrative purposes, it any other radar-based ego-motion estimation approach may be used or applied.

Fig. 6 shows a flow diagram 600 illustrating a dGPS system using Kalman filter 410 without IMU. The inertial measurement unit (IMU) 402 in Fig. 4 has been replaced by a radar-based unit 602, for example including Doppler radars. The Kalman filter 410 merges the results of GNSS 404, for example a preliminary position and/or a preliminary orientation (step 408), and the results of the radar-based unit 602, for example angular rate (for example yaw rate and/or pitch rate and/or roll rate) and/or acceleration (step 406). The preliminary acceleration may be obtained from the ego-motion estimation by deriving the velocity. Since it is assumed, as described herein, that the height of the vehicle may not change much, the pitch rate may not need to be determined. Thus, a determination of the yaw rate may be sufficient. However, it has been found that for a higher accuracy the pitch rate may also be considered. The number of used radar sensors in this system may be flexible and the radar-based unit 602 may be a single radar system or a multi radar system (for example using at least two Doppler radars). The output of the Kalman filter 410 may be an improved angular rate (which may be referred to as final angular rate), and/or an improved acceleration (which may be referred to as final acceleration), and/or an improved position (which may be referred to as final position) and/or an improved orientation (which may be referred to as final orientation)..

In contrast to radar-based ego-motion estimation which may instantaneously estimate the ego-motion using Doppler measurements as described herein, a camera-based ego-motion estimation may need at least two consecutive frames for estimation the ego-motion of a vehicle. The general basis for that may be the so-called epipolar geometry which may describe the geometric relationship between camera images if the optical flow is known. A robust estimation as with the RANSAC method as described herein may allow to estimate the motion parameters and may split the data points (in other words: flow vectors) into static environment and moving objects or noise. In order to estimate the optical flow, different methods are known which may be in general split into sparse methods (e.g. Lucas-Kanade method) and dense methods (e.g. Horn-Schunck method) which also differs in the computational effort.

The methods according to various embodiments may be the scalable and flexible. For example, the ego-motion may be estimated using one or multiple perception sensors of the same type that may estimate ego-motion (e.g. radar sensors, LIDAR sensors, camera systems or ultrasonic sensors). Also, sensors of different types may be used simultaneously, by fusing the individual ego-motion results and the number of estimated axes may be variable. The basic set may be velocity and yaw rate (2D), but if the available sensor configuration may allow for more axes/dimensions to be estimated, this information may be fully used by the method described herein.

The methods according to various embodiments may be employed and connect to the available components in a vehicle for realizing a cost-efficient and accurate dGPS. According to various embodiments, the methods described herein may use the outputs of an available navigation interface, a communication interface and a perception interface to generate a dGPS solution without need of any extra hardware and costs as autonomous vehicles may already be equipped with perception systems.

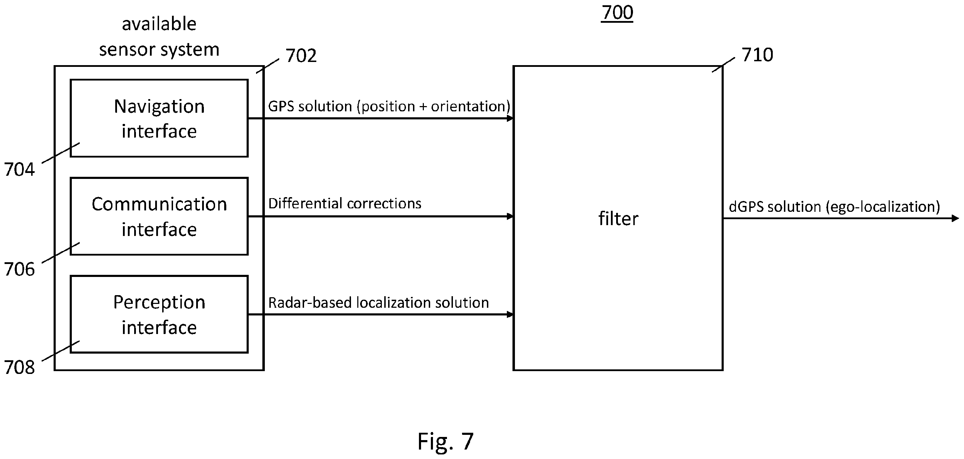

Fig. 7 shows a block diagram 700 of a radar-based dGPS system which may use the already available sensor system 702 of the vehicle to generate a dGPS solution. The available navigation interface 704 may output a GPS solution containing a position and an orientation. The position estimation accuracy of GPS solution may be in the range of meters. The communication interface 706 may receive the differential correction signals via a mobile network. The perception interface 708 may include a radar sensor system including one or several radar sensors. The radar sensors may keep the ego-motion estimation online in absence of GPS signal like in tunnels, under bridges, in urban environments with tall buildings, or the like. Also, if the GPS signal is available, the ego-motion determined by the radar sensors may be used to be fused with the GPS solution from the navigation interface 704 with a filter 710, for example a Kalman filter.

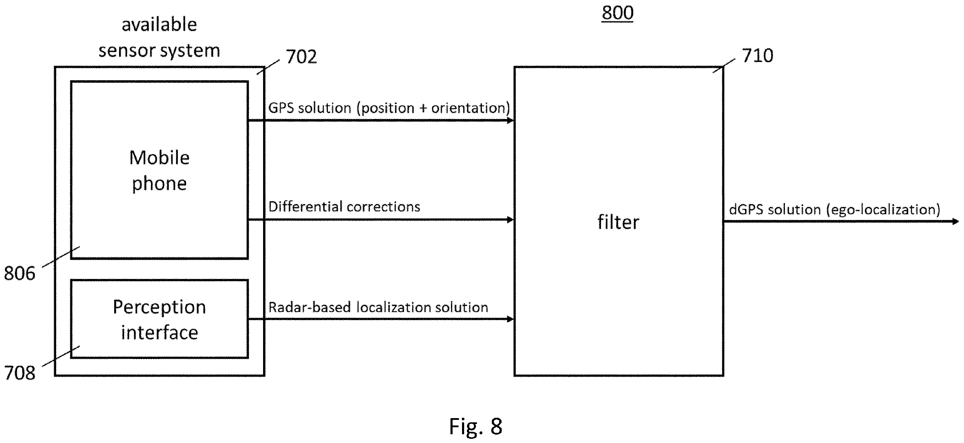

According to another embodiment, Fig. 8 shows a block diagram 800 of a radar-based dGPS system using a mobile phone 806. Compared to Fig. 7, the navigation interface 704 and the communication interface 706 may be replaced by a mobile phone 806. Other components or data as illustrated in Fig. 7 may be identical or similar to the components shown in Fig. 8, so that the same reference signs may be used and duplicate description may be omitted. The mobile phone 806 may output a GPS solution containing a position and an orientation. The mobile phone 806 may also be directly connected to the mobile phone network and the service for the differential corrections may be used for generating a dGPS solution. The perception interface 808 may include a radar sensor system consisting of one or several radar sensors. The radar sensors may keep the ego-motion estimation online in absence of GPS signal like in tunnels, under bridges, in urban environments with tall buildings, or the like. Also, if the GPS signal is available, the ego-motion determined by the radar sensors may be used to be fused with the GPS solution from the mobile phone 806 with a filter 810, for example a Kalman filter.

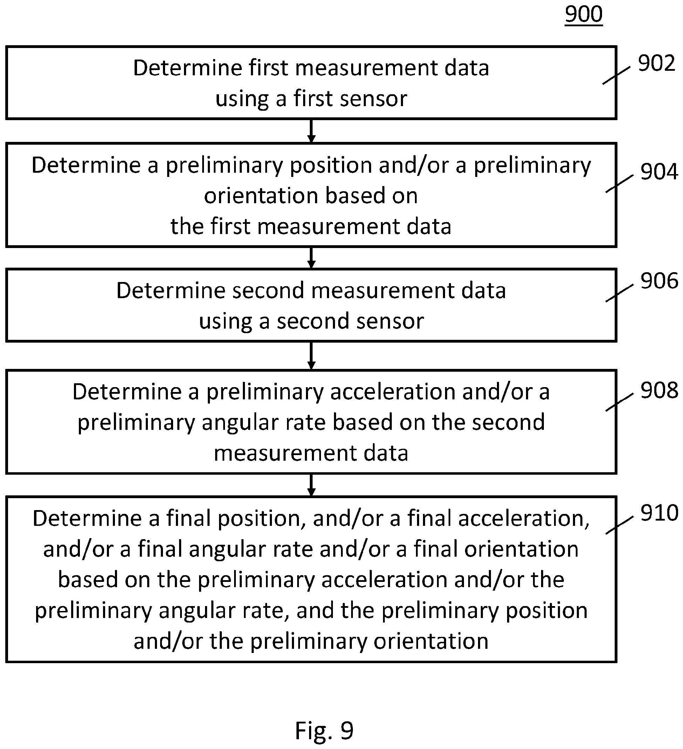

Fig. 9 shows a flow diagram 900 illustrating a method for determining a final position, and/or a final acceleration, and/or a final angular rate and/or a final orientation of a vehicle (1110) according to various embodiments. At 902, first measurement data may be determined using a first sensor. At 904, a preliminary position and/or a preliminary orientation may be determined based on the first measurement data. At 906, second measurement data may be determined using a second sensor, wherein the second sensor may be a radar sensor (1010) and/or a LIDAR sensor (1010) and/or a camera (1008). At 908, a preliminary acceleration and/or a preliminary angular rate may be determined based on the second measurement data. At 910, a final position, and/or a final acceleration, and/or a final angular rate and/or a final orientation may be determined based on the preliminary acceleration and/or the preliminary angular rate, and the preliminary position and/or the preliminary orientation.

According to an embodiment, the final position, and/or the final acceleration, and/or the final angular rate and/or the final orientation may be determined by a Kalman filter.

According to an embodiment, the method may further include: receiving differential correction signals via a mobile network.

According to an embodiment, the differential correction signals may be received by a communication interface (706) of the vehicle (1110) or a mobile device (806).

According to an embodiment, the preliminary position and/or the preliminary orientation may be determined using a navigation interface of the vehicle (1110).

According to another embodiment, the preliminary position and/or the preliminary orientation may be determined using a mobile device (806).

According to an embodiment, the first sensor may include a GNSS sensor (404).

According to an embodiment, the preliminary angular rate may be a yaw rate (1106) and/or a pitch rate and/or a roll rate and/or the final angular rate may be a yaw rate (1106) and/or a pitch rate and/or a roll rate.

According to an embodiment, the radar sensor (1010) and/or the LIDAR sensor (1010) may estimate the angular rate and a velocity (1108) of the vehicle (1110) based on stationary target detections, and the preliminary acceleration may be determined by deriving the velocity (1108) of the vehicle (1110).

According to another embodiment, the radar sensor (1010) and/or the LIDAR sensor (1010) capture at least two consecutive frames, wherein the preliminary angular rate and/or the preliminary acceleration are estimated based on the at least two consecutive frames.

According to an embodiment, the camera (1008) may capture at least two consecutive frames, wherein the preliminary angular rate and/or the preliminary acceleration may be estimated based on the at least two consecutive frames.

According to an embodiment, the second sensor may include an ultrasonic sensor.

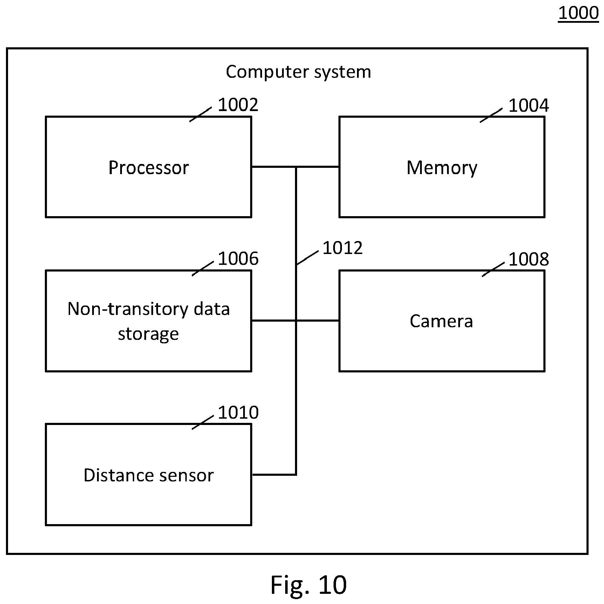

Each of the steps 902, 904, 906, 908, 910 and the further steps described above may be performed by computer hardware components, for example as described with reference to Fig. 10.

Fig. 10 shows a computer system 1000 with a plurality of computer hardware components configured to carry out steps of a computer implemented method for determining a position and an acceleration of a vehicle according to various embodiments. The computer system 1000 may include a processor 1002, a memory 1004, and a non-transitory data storage 1006. A camera 1008 and/or a distance sensor 1010 (for example a radar sensor and/or a LIDAR sensor) may be provided as part of the computer system 1000 (like illustrated in Fig. 10), or may be provided external to the computer system 1000.

The processor 1002 may carry out instructions provided in the memory 1004. The non-transitory data storage 1006 may store a computer program, including the instructions that may be transferred to the memory 1004 and then executed by the processor 1002. The camera 1008 and/or the distance sensor 1010 may be used to determine measurement data, for example measurement data that is provided to the methods described herein.

The processor 1002, the memory 1004, and the non-transitory data storage 1006 may be coupled with each other, e.g. via an electrical connection 1012, such as e.g. a cable or a computer bus or via any other suitable electrical connection to exchange electrical signals. The camera 1008 and/or the distance sensor 1010 may be coupled to the computer system 1000, for example via an external interface, or may be provided as parts of the computer system (in other words: internal to the computer system, for example coupled via the electrical connection 1012).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 1000.

### Reference numeral list

- 100: effect of time delay of the signal of satellite(s)
- 102: satellite number 1
- 104: satellite number 2
- 106: correct distance of satellite number 3
- 108: estimated distance of satellite number 3

- 200: configuration of a dGPS system with a base station
- 202: base station
- 204: receiver
- 206: satellite
- 208: satellite
- 210: correction signal

- 300: block diagram of a dGPS system
- 302: inertial measurement unit (IMU)
- 304: GNSS card
- 306: CPU board intermediate electronics
- 308: output interface

- 400: flow diagram illustrating a dGPS system
- 402: inertial measurement unit (IMU)
- 404: GNSS antenna
- 406: step of determining preliminary angular rates and/or a preliminary acceleration
- 408: step of determining a preliminary position and/or a preliminary orientation
- 410: step of filtering using a Kalman filter
- 500: flow diagram for ego-motion estimation based on Doppler radar
- 502: step of determining radar detections
- 504: step of filtering stationary detections
- 506: step of estimating ego-motion
- 508: step of refining ego-motion with all inliers

- 600: flow diagram illustrating a dGPS system without IMU
- 602: radar-based unit

- 700: block diagram of a radar-based dGPS system
- 702: sensor system
- 704: navigation interface
- 706: communication interface
- 708: perception interface
- 710: filter

- 800: block diagram of a radar-based dGPS system using a mobile phone
- 806: mobile phone

- 900: flow diagram illustrating a method for determining a position and an acceleration of a vehicle according to various embodiments
- 902: step of determining first measurement data using a first sensor
- 904: step of determining a preliminary position and/or preliminary orientation based on the first measurement data
- 906: step of determining second measurement data using a second sensor
- 908: step of determining a preliminary acceleration and/or an angular rate based on the second measurement data
- 910: step of determining a final position and a final acceleration based on the yaw angle, the first measurement and the preliminary position
- 1000: computer system according to various embodiments
- 1002: processor
- 1004: memory
- 1006: non-transitory data storage
- 1008: camera
- 1010: distance sensor
- 1012: connection

- 1100: velocity profiling using Doppler component of stationary targets
- 1101: transformation of sensor velocity and its direction to yaw rate and vehicle velocity
- 1102: stationary target
- 1104: sensor velocity
- 1106: yaw rate of the vehicle
- 1108: vehicle velocity
- 1110: vehicle

## Claims

1. Computer implemented method for determining a position, and/or an acceleration, and/or an angular rate and/or an orientation of a vehicle (1110),
the method comprising the following steps carried out by computer hardware components:
- determining first measurement data (902) using a first sensor;
- determining a preliminary position and/or a preliminary orientation (904) based on the first measurement data;
- determining second measurement data (906) using a second sensor, wherein the second sensor comprises a radar sensor (1010) and/or a LIDAR sensor (1010) and/or a camera (1008);
- determining a preliminary acceleration and/or a preliminary angular rate (908) based on the second measurement data; and
- determining a final position, and/or a final acceleration, and/or a final angular rate and/or a final orientation (910) based on:
the preliminary acceleration and/or the preliminary angular rate, and
the preliminary position and/or the preliminary orientation.

2. The method of claim 1,
wherein the final position, and/or the final acceleration, and/or the final angular rate and/or the final orientation are determined by a Kalman filter.

3. The method of at least one of claims 1 or 2, further comprising the following step carried out by the computer hardware components:
- receiving differential correction signals via a mobile network.

4. The method of claim 3,
wherein the differential correction signals are received by a communication interface (706) of the vehicle (1110) or a mobile device (806).

5. The method of at least one of claims 1 to 4,
wherein the preliminary position and/or the preliminary orientation is determined using a navigation interface of the vehicle (1110).

6. The method of at least one of claims 1 to 4,
wherein the preliminary position and/or the preliminary orientation is determined using a mobile device (806).

7. The method of at least one of claims 1 to 6,
wherein the first sensor comprises a GNSS sensor (404).

8. The method of at least one of claims 1 to 7,
wherein the preliminary angular rate comprises a yaw rate (1106) and/or a pitch rate and/or a roll rate and/or the final angular rate comprises a yaw rate (1106) and/or a pitch rate and/or a roll rate.

9. The method of at least one of claims 1 to 8,
wherein the radar sensor (1010) and/or the LIDAR sensor (1010) estimates the angular rate and a velocity (1108) of the vehicle (1110) based on stationary target detections, and the preliminary acceleration is determined by deriving the velocity (1108) of the vehicle (1110).

10. The method of at least one of claims 1 to 9,
wherein the radar sensor (1010) and/or the LIDAR sensor (1010) capture at least two consecutive frames, wherein the preliminary angular rate and/or the preliminary acceleration are estimated based on the at least two consecutive frames.

11. The method of at least one of claims 1 to 10,
wherein the camera (1008) captures at least two consecutive frames,
wherein the preliminary angular rate and/or the preliminary acceleration are estimated based on the at least two consecutive frames.

12. The method of at least one of the claims 1 to 11,
wherein the second sensor comprises an ultrasonic sensor.

13. Computer system, the computer system comprising a plurality of computer hardware components configured to carry out steps of the computer implemented method of at least one of claims 1 to 12.

14. Vehicle (1110), comprising the computer system of claim 13, the first sensor and the second sensor.

15. Non-transitory computer readable medium comprising instructions for carrying out the computer implemented method of at least one of claims 1 to 12.
